Europäisches Patentamt

European Patent Office

Office européen des brevets

(11) Publication number: **0 165 702**
**B1**

# EUROPEAN PATENT SPECIFICATION

(45) Date of publication of patent specification: **02.11.88**

(51) Int. Cl.⁴: **G 11 B 23/04,** G 11 B 23/28

(21) Application number: **85303413.0**

(22) Date of filing: **15.05.85**

(54) **A safety arrangement for cassette recorders and/or playback apparatus.**

(30) Priority: **16.05.84 SE 8402635**

(43) Date of publication of application:
**27.12.85 Bulletin 85/52**

(45) Publication of the grant of the patent:
**02.11.88 Bulletin 88/44**

(84) Designated Contracting States:
**AT BE CH DE FR GB LI NL SE**

(56) References cited:
**WO-A-83/02846**
**US-A-4 131 001**

(73) Proprietor: **Gotto, Raymond John**
**Eugeniavägen 41**
**S-113 33 Stockholm (SE)**

(72) Inventor: **Gotto, Raymond John**
**Eugeniavägen 41**
**S-113 33 Stockholm (SE)**

(74) Representative: **Selby-Lowndes, Guy Francis**
**Charles**
**Moonrakers Durfold Wood**
**Plaistow Billinghurst West Sussex RH14 0PL**
**(GB)**

Courier Press, Leamington Spa, England.

## Description

This invention relates to a safety arrangement for preventing the unauthorised use of cassette recording and/or playback apparatus, such as audio cassette players, video recorders and/or reproduction devices, having a slot or opening into which a cassette is inserted. The cassettes normally contain one or more spools carrying polymeric tapes coated with a thin layer of magnetisable material.

The safety arrangement comprises a dummy cassette adapted for insertion into the audio cassette player or video recorder, for example when the player or recorder is to be left unattended e.g. in a public place, and acts as a deterrent against theft of the player or recorder. The dummy cassette consists of a casing having an externally operable mechanism within its walls which activates locking means whereby the cassette cannot be removed without catastrophic damage to the player or recorder. Dummy cassettes of this nature render apparatus in which they are locked unattractive to thieves since the apparatus is virtually useless unless a means can be found to remove the dummy cassette without damaging the apparatus. Such cassettes also prevent unauthorised use of the apparatus e.g. the viewing of tapes which are to be used in legal proceedings or whose content has a high security classification.

United Kingdom patent specification no. 1,570,616 describes a device for use in preventing unauthorised use of a tape recorder, comprising a body shaped and adapted to be inserted into the cassette-receiving cavity of a recorder, the body carrying latching means which can be operated to change from a first condition in which the device can be inserted into a recorder cassette-receiving cavity, to a second condition in which after such insertion the device is mechanically latched in the cavity such as to prevent removal of the device from the cavity, the latching means including a locking mechanism operable by a user of the device to lock the latching means in said second condition.

A disadvantage of the dummy cassette described in the above publication is that it may not conform to the tolerances used for the standard dimensions of audio and/or video recording and replaying apparatus. For this reason such dummy cassettes cannot be used in all commercial equipment without the risk of damage. The locking mechanism interacts with the inside of the cassette-receiving cavity which varies in structure from manufacturer to manufacturer. Furthermore in some cases the locking mechanism may damage the recording apparatus into which it is inserted when locked.

An object of the present invention is to provide an improvement on the known technique with an arrangement which can readily be manufactured and which requires relatively little or no service. A further object is to provide an arrangement which fulfills all safety requirements, and which can also be used in conjunction with practically all types of recording and playback apparatus available on the market.

The invention is characterised in that the transmission means is adapted to operate sleeve-like members in a manner to cause the sleeve-like members to move from a passive or inactive position within the dummy cassette through openings arranged in a casing part of said device and to embrace the drive shafts of the recording and/or playback apparatus.

The invention will now be described with reference to two embodiments thereof illustrated in the accompanying drawings in which:

Figure 1 is a plan view of a first embodiment of an arrangement according to the invention, including a dummy cassette, one casing side of which has been removed;

Figure 2 illustrates an activating mechanism in three sectional part views A, B and C;.

Figure 3 is a plan view of a second embodiment of an arrangement according to the invention, including a dummy cassette, one casing side of which has been removed; and

Figure 4 is an exploded view of the arrangement according to Figure 3.

For the sake of simplicity the invention will be described hereinafter with respect to a cassette type playback apparatus, although it will be understood that such apparatus also includes sound and/or video recording and reproduction devices. The structural design and operational mode of such apparatus is well known and will not therefore be described in detail.

A conventional cassette type playback apparatus includes a cassette receiving cavity 10. The apparatus may be portable or intended as a permanent fixture in an automotive vehicle or boat and intended for reproducing and, optionally, reproducing sound. The playback apparatus may also be a video-tape reproduction of known kind. The cavity 10 contains an elongated rectangular dummy cassette 11 which has been inserted into it in the direction denoted by the arrow A. The outer part of the cassette 11 is made of a robust sheet material such as sheet metal. The dummy cassette 11 has an external shape and dimensions which are compatible with standard tape cassettes, e.g. Betamax, VHS, Philips 2000 etc. The cassette body is made from two separable cassette halves 12 and 13 which have a cavity between them. In the case of a sound or video cassette this cavity accomodates magnetic recording tape and the externally driveable shafts each of which carries a tape spool. One half of the dummy cassette casing 12 exhibits two recesses 18, 19 arranged sequentially in the longitudinal direction, and a plate 20 arranged between the openings and covering them.

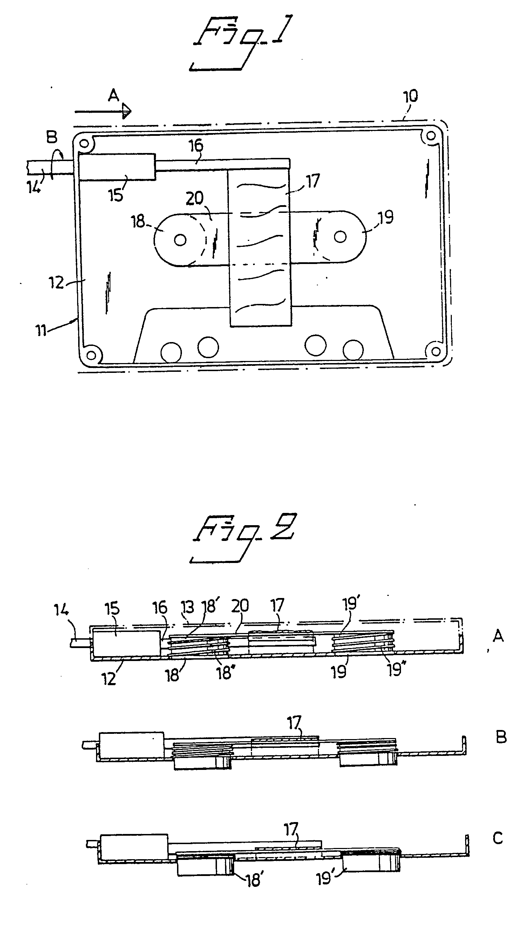

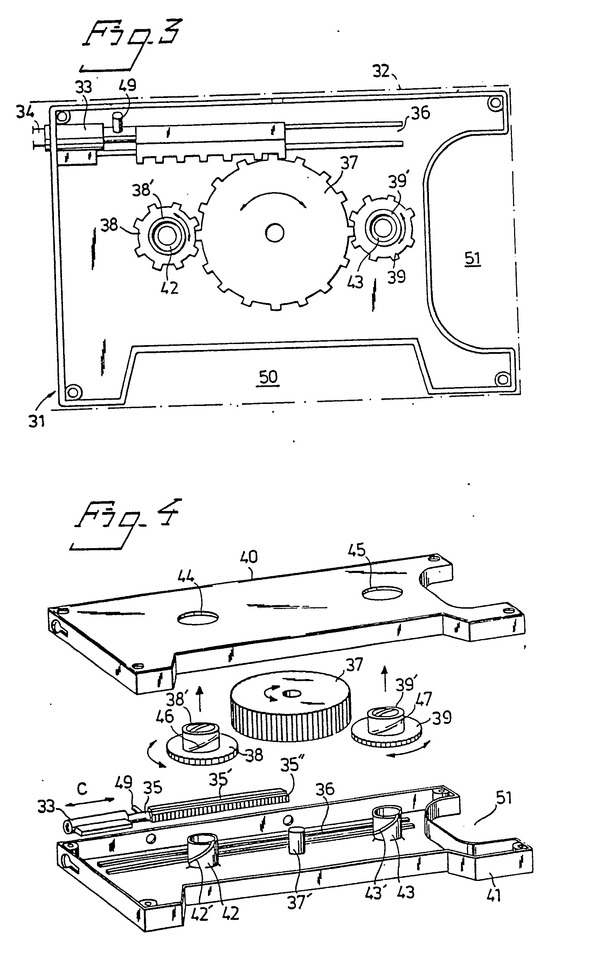

As will be seen in Figures 1 and 2, in accordance with the invention a key or some other activating means 14 can be inserted into a lock cylinder 15 of a known kind which, upon rotating of the key 14, synchronously rotates a shaft 16 forming an extension of the lock cylinder 15 and operatively coacting with it. The free end of the shaft 16 is connected with one end of an arcuate or bowed elongate element 17 which extends transversely from the shaft 16. The other end of the element 17 is seated firmly at the bottom of the casing half 12 of the dummy cassette 11, either directly or indirectly. The elongate element 17 is arranged to lie above the plate 20 and will normally show some degree of slack, which can be taken up, when the key 14 is turned.

The openings 18, 19 in the cassette half 12 of the dummy cassette 11 are arranged to accomodate moveable sleeve-like members 18' and 19' respectively which, when occupying their inactive position, extend completely through or substantially completely through the space formed between the two halves of the cassette 11 and 12. The sleeve-like members 18' and 19' are biased by respective springs 18'' and 19'' in a manner such that the members 18' and 19' are normally urged against the undersurface of the plate 20, for example as shown in Figure 2-A. By this means it is possible for one end of the respective springs 18'' and 19'' to be firmly connected to the undersurface of the plate 20 and the other ends of the springs to be connected to the corresponding sleeve-like members 18' and 19' moveable through the respective openings 18 and 19. For this reason the springs 18" and 19" may take the form of thrust springs which endeavour to take the passive position, illustrated in Figure 2-A, in which the lower edges of the sleeve-like members 18' and 19' are flush with or substantially flush with the undersurface of the cassette half 12. The sleeve-like members are thus located within the space between the two halves 12 and 13 of the dummy cassette when inactive.

The above arrangement operates as follows when it is desired to lock the dummy cassette 11 into the cassette receiving cavity 10. The dummy cassette 11 is inserted into the cavity 10 of the playback apparatus, e.g. a cassette sound and/or video recorder/playback device, in conventional manner. After insertion the key or similar lock activating means 14 is placed in the lock cylinder 15 and turned in the direction shown by the arrow B, see Figure 1. Rotation of the key 14 causes the shaft 16 to rotate in the same direction so that the elongated element 17 is stretched or tensioned and presses down against the plate 20. Because the plate 20 in the position shown in Figure 2-A is located in a higher plane than the two attachment points of the elongate element 17, further rotation of the key will cause the plate 20 to be urged downwardly against the action of the springs 18'' and 19'' dogging therewith the moveable sleeve-like members 18' and 19', see Figure 2-B. (Initially as beforementioned the elongate member 17 is bowed.) As rotation of the key 14 is continued the elongate member 17 urges the plate 20 into its final position, see Figure 2-C, in which the thrust springs 18'' and 19'' have reached their maximum compression state. The sleeve-like members 18' and 19' will then be in their final position and protrude out of the cassette half 12 and able to embrace the drive shafts, not shown, of the playback apparatus. When this final, active position is reached the key 14 is withdrawn from the lock cylinder 15 and the dummy cassette is firmly locked into the playback apparatus.

The device described with reference to and as illustrated in Figures 1 and 2 can be used with the majority of cassette players and video reproduction devices available at the present time. The simple construction provides an efficient locking mechanism which require little or no service or maintenance. Naturally the outer dimensions of the case 11 of the dummy cassette and the location of the sleeve-like members 18' and 19' should conform to the standard dimensions for the cassette receiving cavity and the drive shaft positions in the playback apparatus. For example in the case of video recorder/players the dimensions and the sleeve-like member locations may conform to the standard dimensions laid down for the well-known VHS, Betamax or V2000 systems. Other standards exist both for video and sound recording cassettes and the dummy cassettes according to the invention may be configured to meet these standards.

The second embodiment of the playback device locking arrangement illustrated in Figure 3 and in the exploded view in Figure 4 has pricipally the same mode of operation as the arrangement previously described with respect to Figures 1 and 2. The second embodiment uses a different mechanical arrangement to move the sleeve-like members into their active, locking, position. This arangement is intended for use in playback apparatus of the kind in which the whole of the cassette, in an active playback position, is oriented within the playback apparatus and in which one or more edge portions of the cassette may be arranged to activate switch means for switching the apparatus into its playback mode.

The locking arrangement illustrated in Figures 3 and 4 has a thickness corresponding to a conventional cassette. The outer shape, however, differs from that of a conventional cassette, for reasons hereinafter made apparent.

The dummy cassette 31 can be inserted into a playback apparatus, shown in chain lines at 32, in the direction of the arrow as beforedescribed, and comprises two mutually connectable elongate rectangular casing parts 40, 41, which define a cavity therebetween. Arranged in the cavity between the casing parts 40, 41 is a lock cylinder 33 which is adapted to co-act with an activating means or key, indicated at 34. The whole of the lock cylinder is located within said cavity and communicates with the outer side of the casing 31 through the keyhole located on the short side of the casing. The lock cylinder 33 merges with a rotatable shaft 35 inserted in a hollow cylindrical elongated rack member 35' having teeth 35'' arranged along the whole of its length on the outer surface thereof. The shaft 35, and thus also the lock cylinder part 33, is held against displacement relative to the rack element 35'. The lock cylinder 33, the shaft 35 and the rack element 35' therewith form an assembly which can be moved axially backwards and forwards in the direction of the arrow C (Figure 4). Thus, this assembly can be moved axially along a path 36 with the aid of the key 34, the teeth 35'' on the rack element being adapted to co-act with corresponding teeth on a centrally arranged toothed wheel or cog 37 arranged for rotation on a shaft 37'.

Arranged on both sides of the cog wheel 37 and in driving connection therewith is a respective toothed wheel or cog 38 and 39 firmly mounted on one end of an associated sleeve 38', 39'. The sleeves 38', 39' with associated cog wheel 38, 39 are arranged in one position to embrace upstanding cylindrical pegs 42, 43 arranged on the bottom of the casing part 41, each of the pegs presenting a respective helical groove 42', 43'. The height of the teeth on the cog wheel 37 corresponds substantially to the height of the pegs 42, 43, while the height of the teeth on the laterally placed cog wheels 38, 39 are considerably shorter. The sleeves 38' and 39' accommodating respective cog wheels 38, 39 are provided with an internal bead or like raised portion, indicated at 46 and 47, having a configuration corresponding to the configuration of the helical grooves 42', 43'.

The cassette casing part 40 presents two through openings 44, 45 arranged in the same vertical plane as the stationary pegs 42, 43.

When the dummy cassette 31 is inserted into the playback apparatus 32, the elements 33, 35 and 35' are displaced with the aid of the key or activating means 34 along the path 36. As will be seen from Figure 3, this results in simultaneous rotation of the cog wheel 37. This rotary movement is transferred to the two laterally located thinner cog wheels 38, 39, wherewith the guide means 46, 47 and 42', 43' respectively urge the cog wheels 38 and 39 upwardly along the central cog wheel 37, wherewith the sleeves 38', 39' connected with respective cog wheels 38, 39 are guided out through the openings 44 and 45 respectively in the second casing part 40 and caused to embrace the drive shafts of the playback apparatus. For the purpose of holding the dummy cassette in this active position, there is arranged on a free part of the shaft 35 between the lock cylinder 33 and the rack part 35' a pin 49 which, when the activating means 34 and therewith also the shaft 35 are rotated, is arranged to engage in a recess 49'. The lock mechanism 33 of this embodiment is also arranged to be locked in the aforedescribed active position in a known manner, it being necessary to have access to the activating means 34 in order to release the lock.

The lock arrangement illustrated in Figures 3 and 4 also includes a laterally arranged recess 50 intended when using the aforementioned type of playback apparatus for sound cassettes to eliminate drive release of the playback apparatus. The recess 51 is intended for eliminating the recoupling means of the playback apparatus. These recesses 50 and 51 may eliminate, for example, operation of the release function of the playback apparatus.

The above described and illustrated embodiments represent practical examples of the inventive concept, the concept of providing a dummy cassette with means which cause sleeve-like members to co-act in a locking manner with the drive shafts of the playback apparatus into which they are inserted. In this locked state the playback apparatus and the dummy cassette form an assembly or unit which can only be separated with the aid of an activating means such as a key.

As will be understood by those skilled in this art, the aforedescribed arrangement can also be combined with an alarm system in some suitable manner. Such alarm systems can be activated when attempts are made to remove the dummy cassette when locked or by movement or vibration of the assembly. The dummy cassette is preferably constructed from metal which will assist in preventing damage to the playback apparatus.

The described embodiments show the locking means and key entry made from the short edge of the rectangular cassette body. Where necessary, for instance when recorder or playback configuration dictates it, the key entry may be made from the long edge of the rectangular dummy cassette body. Such a change will necessitate a rearrangement of the internal elements of the locking system which would cause no difficulty for a person skilled in this art.

## Claims

1. An arrangement for preventing unauthorised use of a cassette type playback apparatus (10, 32), such as a cassette recorder and/or player or a video recording and/or reproduction device, in combination with a dummy cassette (12, 13 and 40, 41) intended for insertion into a slot or opening, provided in the playback apparatus (10, 32) as a cassette receiving cavity, the dummy cassette comprising an externally actuable mechanism which is arranged in the cavity present between sections of the dummy cassette and which is arranged to transfer, with the aid of transmission means, movement to locking means arranged to co-act with the playback apparatus in a manner such that when the locking means occupies a given position the playback apparatus and the dummy cassette form an inseperable assembly, characterised in that the transmission means (15, 16, 17, 20 and 33, 35, 37, 38, 39) is operative to activate sleeve-like members (18', 19' and 38', 39') in a manner to move said sleeve-like members from a passive position within the dummy cassette through openings in a casing part associated therewith to an active position in which said sleeve-like members embrace the drive shafts of the playback apparatus.

2. An arrangement according to claim 1, characterised in that the sleeve-like members (18', 19') are activated synchronously with the aid of a spring-biased plate (20) co-acting with said members.

3. An arrangement according to claim 2, characterised in that the transmission means includes an elongated element (17) which is arranged to co-act with the plate (20) and which is adapted to move the sleeve-like members (18′, 19′) from said inactive position to said active position with the aid of the externally actuable mechanism (15, 16).

4. An arrangement according to claim 1, characterised in that the activating mechanism (33, 35) is displaceably arranged so as to activate indirectly said sleeves (38′, 39′) which are moveable in the vertical direction and which in one terminal position embrace the drive shaft or shafts of the playback apparatus.

5. An arrangement according to claim 4, characterised in that the sleeves (38′, 39′) are firmly connected to a cog wheel (38, 39) and arranged to coact, via the transmission means with cylindrical pegs (42, 43) firmly mounted on the one part of the casing.

6. An arrangement according to claims 4 and 5, characterised in that the dummy cassette carries one or more recesses or cut-outs (50, 51) intended to avoid interaction with the cassette operated mechanical systems present in the playback apparatus.

7. An arrangement according to claim 6, characterised in that the recesses or cut-outs (50, 51) are intended to eliminate, for example, operation of the release function of the playback apparatus.

8. An arrangement according to claim 1, characterised in that the dummy cassette includes an alarm system.

**Patentansprüche**

1. Eine Vorrichtung zum Verhindern einer unberechtigten Benutzung von Wiedergabegeräten, (10, 32), wie z.B. Kassettenrecorder und/oderspieler oder Videorecorder oder -wiedergabegerät, zusammen mit Kassettenattrappe (12, 13, und 40, 41) zum Einfügen in einen Schlitz oder eine Öffnung, die sich im Wiedergabegerät (10, 32) befindet, in Gestalt eines Hohlraumes; die Kassettenattrappe bestehend aus eimem äußerlich auslösbaren Mechanismus, untergebracht im Hohlraum zwischen Abteilungen der Kassettenattrappe und so arrangiert, daß Bewegung dem Verschlußmechanismus übertragen wird, im Zusammenhang mit einem Übertragungsmechanismus, um zusammen mit dem Wiedergabegerät so zu funktionieren, daß der Verschlußmechanismus in einer bestimmten Position das Wiedergabegerät und die Kassettenattrappe zu einem untrennbaren Zusammenbau vereinen, dadurch gekennzeichnet, daß der Übertragungsmechanismus (15, 16, 17, 20 und 33, 35, 37, 38, 39) operativ ist, um die Hüllen (18, 19 und 38′, 39′) von ihrer passiven Position in der Kassettenattrappe durch Öffnungen im Gehäuse davon in eine aktive Position zu bewegen, sodaß die Hüllen die Treibwellen des Wiedergabegerätes umfassen.

2. Ein Gerät wie in patentanspruch 1, dadurch gekennzeichnet, daß die Hüllen (18′, 19′) synchronisch aktiviert werden, wenn eine gefederte Platte (20) mit oben-genannten Hüllen co-agiert.

3. Ein Gerät wie in Patentanspruch 2, dadurch gekennzeichnet, daß der Übertragungsmechanismus ein verlängertes Element enthält (17), das so arrangiert ist, um mit der Platte (20) zu co-agieren, und so eingestellt ist, daß es die Hüllen (18′, 19′) von der obengenannten inaktiven Position zur oben-genannten aktiven Position bewegt, mit Hilfe des äußerlich beweglichen Mechanismus (15, 16).

4. Ein Gerät wie in Patentanspruch 1, dadurch gekennzeichnet, daß der Agierungsmechanismus (33, 35) verschiebbar arrangiert ist, um indirekt die oben genannten Hüllen (38′, 39′) zu bewegen, die in vertikale Richtung bewegt werden können und die in einer letzten Position die Treibwelle oder -wellen des Wiedergabegerätes umfassen.

5. Ein Gerät wie in Patentanspruch 4, dadurch gekennzeichnet, daß die Hüllen (38′, 39′) fest mit einem Zahnrad verbunden sind (38, 39) und so arrangiert, um über einen Übertragungsmechanismus mit zylindrischen Pinnen (42, 43) die fest auf einem Teil des Gehäuses angebracht sind, zusammen zu arbeiten.

6. Ein Gerät wie in Patentanspruch 4 und 5, dadurch gekennzeichnet, daß die Kassettenattrappe eine oder mehrere Vertiefungen oder Einschnitte (50, 51) aufweist, die ein Zusammenwirken mit dem mechanischen System im Wiedergabegerät durch die Kassette verhindern.

7. Ein Gerät wie in Patentanspruch 6, dadurch gekennzeichnet, daß die Vertiefungen oder Einschnitte (50, 51) z.B. ausschließen, daß der Rückspringmechanismus für die Kassette im Wiedergabegerät operiert.

8. Ein Gerät wie in Patentanspruch 1, dadurch gekennzeichnet, daß die Kassettenattrappe ein Alarmsystem enthält.

**Revendications**

1. Un dispositif pour empêcher une utilisation illicite d'un appareil de reproduction de type à cassette (10, 32), tel qu'un enregistreur et/ou lecteur à cassette ou un appareil de reproduction et/ou d'enregistrement vidéo, en association avec une cassette factice (12, 13 et 40, 41) destinée à être introduite dans une fente ou une ouverture, prévue dans l'appareil de reproduction (10, 32) comme cavité pour recevoir une cassette, la cassette factice comprenant un mécanisme actionnable de l'extérieur qui est installé dans la cavité présente entre les portions de la cassette factice et qui est prévu pour transférer, à l'aide d'un moyen de transmission, le mouvement vers le moyen de blocage prévu pour co-fonctionner avec l'appareil de reproduction de manière à ce que lorsque le moyen de blocage occupe une position donnée, l'appareil de reproduction et la cassette factice forme un ensemble inséparable, caractérisé en ce que le moyen de transmission (15, 16, 17, 20 et 33, 35, 37, 38, 39) entre en vigueur pour actionner des membres en forme de manchons (18′, 19′ et 38′, 39′) de manière à déplacer les dits membres en forme de manchons d'une position passive à l'intérieur de la cassette factice à travers des ouvertures dans une partie du corps de la cassette à laquelle ils sont associés vers une position active dans laquelle les dits membres en forme de manchon entourent les arbres de transmission de l'appareil de reproduction.

2. Un dispositif selon la revendication 1, caractérisé en ce que les membres en forme de manchons (18', 19') sont activés simultanément à l'aide d'une plaque entraînée par ressort (20) co-fonctionnant avec les dits membres.

3. Un dispositif selon la revendication 2, caractérisé en ce que le moyen de transmission comprend un élément de forme allongée (17) qui est prévu pour co-fonctionner avec la plaque (20) et qui est adapté pour déplacer les membres en forme de manchons (18', 19') d'une position dite inactive à une position dite active au moyen d'un mécanisme actionnable de l'extérieur (15, 16).

4. Un dispositif selon la revendication 1, caractérisé en ce que le mécanisme d'activation (33, 35) est installé et movible de manière à activer indirectement les dits manchons (38', 39') qui peuvent se déplacer en direction verticale et qui dans une position finale entourent l'arbre de transmission ou les arbres de l'appareil de reproduction.

5. Un dispositif selon la revendication 4, caractérisé en ce que les manchons (38', 39') sont solidement liés à une roue dentée (38, 39) et prévu pour co-fonctionner à travers le moyen de transmission avec des chevilles cylindriques (42, 43) solidement montées d'un côté du corps.

6. Un dispositif selon les revendications 4 et 5, caractérisé en ce que la cassette factice comporte un ou plus renfoncements ou entailles (50, 51) destinés à éviter une interaction avec les systèmes mécaniques actionnés par la cassette présents dans l'appareil de reproduction.

7. Un dispositif selon la revendication 6, caractérisé en ce que les renfoncements ou entailles (50, 51) sont destinés à éliminer, par exemple la mise en oeuvre de la fonction d'expulsion de l'appareil de reproduction.

8. Un dispositif selon la revendication 1, caractérisé en ce que la cassette factice comporte un système d'alarme.

*Fig.1*

*Fig.2*

0 165 702

Fig.3

Fig.4

2